# EUROPÄISCHE PATENTSCHRIFT

(11) **EP 3 649 775 B1**
(45) Veröffentlichungstag und Bekanntmachung des Hinweises auf die Patenterteilung: **02.09.2026**
(21) Anmeldenummer: 18737254.5
(22) Anmeldetag: 04.07.2018
(51) Int. Cl.: H04N 7/18, G03B 17/02, G03B 37/04, H04N 23/45, H04N 23/50, H04N 23/90, H04N 23/951

(54) **MULTI-SENSOR-KAMERA**
MULTI-SENSOR CAMERA
CAMÉRA À CAPTEURS MULTIPLES

(30) Priorität: 05.07.2017 DE 102017114962
(43) Veröffentlichungstag der Anmeldung: 13.05.2020
(73) Patentinhaber: Dallmeier electronic GmbH & Co. KG, 93047 Regensburg (DE)
(72) Erfinder: DALLMEIER, Dieter, 93186 Pettendorf (DE)
(74) Vertreter: Glück Kritzenberger Patentanwälte PartGmbB
(86) Internationale Anmeldenummer: PCT/EP2018/068062
(87) Internationale Veröffentlichungsnummer: WO 2019/008019

(56) Entgegenhaltungen:
- EP-A1- 3 177 009
- US-A1- 2015 042 851
- US-A1- 2015 367 958
- US-A1- 2016 191 813

## Beschreibung

Die Erfindung betrifft eine Multi-Sensor-Kamera gemäß dem Oberbegriff des Patentanspruches 1.

Im Bereich der professionellen Videoüberwachung größerer Überwachungsbereiche bestehen hohe Anforderungen an die Auflösung von Details der erfassten Videodaten. Die hierzu verwendeten Videoanlagen weisen eine Vielzahl von Kameras bzw. Videokameras auf, welche speziell für die Videoüberwachung von unterschiedlichsten Überwachungsbereichen ausgebildet sind.

Die Norm DIN EN 62676-4 gibt insbesondere einen globalen Standard zur Planung und Zielvereinbarung von derartigen Videoanlagen zur Überwachung vor. Dieser Standard enthält insbesondere eine allgemeine Klassifikation der erforderlichen Auflösung bezogen auf die Entfernung des abzubildenden Objektes zur Kamera in der Einheit "Pixel/Meter". Die angegebenen Kategorien dieser Klassifikation lauten:
- "Beobachten" (unter 125 Pixel/Meter),
- "Erkennen von bekannten Personen" (ab 125 Pixel/Meter) und
- "Identifizieren einer unbekannten Person" (ab 250 Pixel/Meter).

Bei gegebener Entfernung der abzubildenden Objekte zur Kamera kann eine Erhöhung der Auflösung von Details gemäß den Gesetzen der geometrischen Optik durch eine Erhöhung der Pixeldichte des Bildsensors, und zwar die Pixelanzahl pro Quadratmillimeter oder durch eine Erhöhung der Objektivbrennweite erzielt werden. Es gibt aber auch die alternative Möglichkeit, Kameras mit einem gesteigerten Detailauflösungsvermögen durch die Verwendung mehrerer Kamerasensoren und mehrerer Objektive zu konstruieren, was zum Aufbau von so genannten Multi-Sensor-Kameras führt.

Der Kamerakopf einer derartigen Multi-Sensor-Kamera weist eine Vielzahl von Bildsensoreinheiten auf, wobei eine Bildsensoreinheit jeweils ein Objektiv und einen zugehörigen Bildsensor umfasst, die vorzugsweise eine bauliche Einheit bilden. Der Kamerakopf einer Multi-Sensor-Kamera tastet mit seinen Bildsensoreinheiten unterschiedliche, im allgemein leicht überlappende, Raumwinkelbereiche eines Überwachungsbereiches ab. Derartige Multi-Sensor-Kameras bieten somit den Vorteil, bei einer verhältnismäßig hohen Auflösung bezogen auf den Ort des Überwachungsbereiches (Einheit: Pixel/Meter in der Entfernung x) aufgrund der Gesamtheit der Bildinhalte sämtlicher Bildsensoreinheiten größere Raumwinkel erfassen zu können.

Diverse Hersteller bieten bereits derartige Multi-Sensor-Kameras an, die ihren Bildinhalt mit mehreren Bildsensoreinheiten generieren.

Aus der DE 10 2011 103 378 B3 ist beispielsweise eine Überwachungseinrichtung mit mehreren Kameras bekannt, wobei die Kameras als Multi-Sensor-Kameraeinheiten ausgebildet sind. Die Multi-Sensor-Kameraeinheiten sind in so genannter "Multi-Fokal-Kamera-Technologie" realisiert. Hierzu sind die Bildsensoreinheiten der Multi-Sensor-Kameraeinheiten, welche eine zu überwachende Szenerie mit deutlich unterschiedlichen Gegenstandsweiten erfassen, mit Objektiven unterschiedlicher Brennweite ausstattet. Mit den zugrunde liegenden teilweise sehr unterschiedlichen Abbildungsmaßstäben der einzelnen Bildsensoreinheiten, sowie bezogen auf die verschiedenen Raumwinkel stark unterschiedlichen Pixeldichten bezogen auf den Raumwinkel in den Einheiten "Pixel/Winkel" kann eine Mindestauflösung bezogen auf die Entfernung des Objektes zur Kamera in der Einheit "Pixel/Meter" garantiert werden. Mit dieser Eigenschaft kann die Videoüberwachung konform zu der in der Norm DIN EN 62676-4 vorgegebenen Auflösung geplant, und ein Versprechen zur Erkennbarkeit von Personen in einer vorgegebenen Entfernung gegeben werden. Die DE 10 2011 103 378 B3 offenbart insbesondere ein Verfahren zur Darstellung der Bildinhalte von Bildsensoreinheiten, die der Geometrie der Sensoranordnung entsprechend aus teilweise sehr unterschiedlichen Abbildungsmaßstäben (Objektivbrennweiten) und den hieraus resultierenden, bezogen auf die Raumwinkel, stark unterschiedlichen Pixeldichten, bei dem ein Gesamtbild und beliebige Detailansichten für den Live-Modus und den synchronisieren Play-Back-Modus erzeugt und auf dem Monitor darstellt werden können.

Auch ist es wünschenswert Innenräume mittels lediglich einer geringen Anzahl an Kameras überwachen zu können. Hierzu finden häufig an der Decke des zu überwachenden Innenraumes angebrachte Kameras Anwendung, die ein horizontales Sichtfeld von 360° um die senkrechte Projektionsachse der deckenmontierten Kamera zum Boden aufzeichnen können. Derartige 360° Kameras können auch bereits mehrere Bildsensoreinheiten aufweisen, mittels denen mehrere, in Summe ein 360° Bild ergebende Bildabschnitte oder Raumbereiche erfasst werden.

Aus der US 2015/0367958 A1 ist ein System zur Aufnahme von Luftbildern bekannt, bei dem zumindest eine Kameraeinheit an der Unterseite eines Flugzeuges angeordnet ist. Die Kameraeinheit umfasst sechs unabhängig voneinander steuerbare Kameramodule, wobei jeweils drei Kameramodule entlang zweier paralleler Reihen angeordnet sind.

Aus der US 2016/0191813 A1 ist beispielsweise eine mehrere Bildsensoreinheiten umfassendes Multi-Sensor-Kamera bekannt, welche zur Deckenmontage ausgebildet ist. Die Kamera umfasst vier Bildsensoreinheiten, die in einem kuppelartigen Glasgehäuse aufgenommen sind, wobei das Glasgehäuse sich an ein ringförmiges Grundgehäuse anschließt, in dem die weiteren Bauteile der Kamera aufgenommen sind und welches zur Deckenmontage ausgebildet ist. Im montierten Zustand sind das die Bildsensoreinheiten aufnehmende kuppelartige Glasgehäuse unterhalb des Grundgehäuses und damit beabstandete zur Raumdecke angeordnet. Aufgrund des bestehenden Abstandes zur Raumdecke sind die im dargestellten Ausführungsbeispiel gegebenen vier Bildsensoreinheiten der Kamera derart zueinander angeordnet, dass deren Objektive voneinander wegweisen und dadurch deren Bilderfassungsbereiche von der Mitten- bzw. Längsachse der Kamera nach außen orientiert sind, und zwar ohne sich zu kreuzen. Durch die vier Bildsensoreinheiten ist eine Raumüberwachung in einem horizontalen Sichtfeld von 360° möglich, wobei über eine Bildsensoreinheit jeweils ein horizontales Sichtfeld von ca. 90° erfassbar ist. Nachteilig jedoch ist hierbei der unmittelbar unterhalb der Kamera befindliche Bodenbereich nur teilweise über die vorhandenen, mit ihrer jeweiligen Längsachse schräg nach außen orientierten Bildsensoreinheiten erfassbar. Um eine Erfassung des horizontalen Sichtfeldes von 360° zu ermöglichen, sind die Bildsensoreinheiten bzw. deren Objektive bei einer an der Decke montierten Kamera bzw. Deckenkamera jeweils unterhalb der und beabstandet zur Decke in einem kuppelartigen Glasgehäuse montiert, um ausgehend von der Kameralängsachse nach außen eine freie Sicht auf die zu erfassenden Raumbereiche zu gewährleisten. Nachteilig ist damit keine deckenbündige Montage einer derartigen Multi-Sensor-Kamera möglich.

Ähnliche zur Deckenmontage ausgebildete Kameras umfassend mehrere Bildsensoreinheiten sind beispielsweise aus der CN203069959U oder CN201639666U bekannt, welche insbesondere zusätzliche Bildsensoreinheiten aufweisen, über welche der Raumbereich unmittelbar unterhalb der an der Decke angeordneten Kameras zusätzlich erfassbar ist. Auch hier sind die Bildsensoreinheiten innerhalb des Kameragehäuses unterhalb der Decke derart angeordnet, dass deren Erfassungsbereiche sich radial von der Kameralängsachse nach außen erstrecken, d.h. sich nicht im Bereich des Kameragehäuses kreuzen. Nachteilig ist auch hier keine deckenbündige Montage derartiger Kameras möglich.

Auch aus der Druckschrift EP 3 177 009 A1 ist ein Kamerasystem zur Erfassung eines Panoramabildes bekannt, welches ein Gehäuse mit einer Basis und einer kuppelartigen Glasabdeckung aufweist. Das Kamerasystem umfasst ferner zumindest eine erste und zweite Kameravorrichtung und eine Steuerung, wobei die erste Kameravorrichtung ortsfest und starr an der Basis befestigt ist, eine vorgegebene Erfassungseinrichtung aufweist und zur Erfassung eines Panoramabildes eingerichtet ist. Die zweite Kameravorrichtung ist beweglich auf der Basis angeordnet, so dass die Erfassungsrichtung der zweiten Kameravorrichtung gesteuert einstellbar ist. Abhängig vom von der ersten Kameravorrichtung erfassten Panoramabild kann die die zweite Kameravorrichtung hinsichtlich ihrer Erfassungsrichtung gesteuert werden.

Die Druckschriften US 2015/0042851 A1 und US 2016/0191813 A1 zeigen ebenfalls Multi-Sensor-Kameraeinheiten, die zur Deckenmontage zur Erfassung von Panoramabildern ausgebildet sind.

Ausgehend hiervon liegt der Erfindung die Aufgabe zugrunde, eine Multi-Sensor-Kamera der eingangs genannten Art anzugeben, die in eine Gebäudedecke vorzugsweise flächenbündig einbaubar ist und eine Erfassung des horizontalen Sichtfeldes von 360° ermöglicht. Die Aufgabe wird ausgehend von den Merkmalen des Oberbegriffs des Patentanspruches 1 durch dessen kennzeichnende Merkmale gelöst.

Ein wesentlicher Aspekt der erfindungsgemäßen Multi-Sensor-Kamera ist darin zu sehen, dass die Bildsensoreinheiten konzentrisch um die Kameralängsachse verteilt und derart innerhalb des Gehäuse angeordnet sind, dass die Objektive der Bildsensoreinheiten zur Kameralängsachse orientiert sind oder von der Kameralängsachse wegweisen, wobei mindestens vier Bildsensoreinheiten und mindestens zwei weitere Bildsensoreinheiten vorgesehen sind, und wobei die Sensorlängsachsen beider weiterer Bildsensoreinheiten parallel zur Kameralängsachse verlaufen und eine der weiteren Bildsensoreinheiten ein Fish-Eye-Objektiv aufweist, wobei die mindestens vier Bildsensoreinheiten ringförmig um die Kameralängsachse verteilt im Gehäuse angeordnet sind und die ein Fish-Eye-Objektiv aufweisende weitere Bildsensoreinheit außerhalb des durch die ringförmig verteilten, mindestens vier Bildsensoreinheiten geformten Ringes angeordnet ist. Besonders vorteilhaft ist über die Bildsensoreinheit mit Fish-Eye-Objektiv ein Übersichtsvideobild erzeugbar, wobei die ringförmig um die Kameralängsachse angeordneten Bildsensoreinheiten zur Erzeugung von Detailvideobildern eingerichtet sind. Die weitere Bildsensoreinheit ermöglicht zusätzlich die Erfassung des Raumbereiches unmittelbar unterhalb der Multi-Sensor-Kamera. Hierzu weisen die Bildsensoreinheiten beispielsweise unterschiedliche Auflösungen auf. Besonders vorteilhaft können mittels der erfindungsgemäßen Multi-Sensor-Kamera damit einzelne Raumbereiche mittels zumindest zweier Bildsensoreinheiten in unterschiedlichen Auflösungen erfasst werden und bei der Darstellung des aufgezeichneten Videobildes auf einer Monitoreinheit zwischen dem Übersichtsvideobild und den einzelnen Detailvideobildern umgeschaltet werden, um damit ein "Zoomen" einzelner Raumwinkelbereiche eines 360° Videobildes mit erhöhter Auflösung zu ermöglichen.

In einer Ausführungsvariante der Erfindung sind die Bildsensoreinheiten konzentrisch um die Kameralängsachse verteilt und oberhalb eines Gehäusebodens angeordnet, und zwar derart, dass die Objektive der Bildsensoreinheiten zur Kameralängsachse orientiert sind. Besonders vorteilhaft sind in dieser Ausführungsvariante die Bildsensoreinheiten bezogen auf die Kameralängsachse vollständig innerhalb des flächenbündig in eine Decke einbaubaren Gehäuses angeordnet und jeweils mit ihrem Objektiv in Richtung der Kameralängsachse orientiert. Der Erfassungsbereich jeder Bildsensoreinheit erstreckt sich zunächst über den Innenraum des Gehäuses, die Bilderfassungsöffnung bzw. die optisch transparente, flache Abdeckplatte nach außen, d.h. die Erfassungsbereiche der Bildsensoreinheiten kreuzen sich im Bereich der Kamera, und zwar bereits im Inneren des Gehäuses und ermöglichen damit besonders vorteilhaft einen flächenbündigen Einbau der Kamera in eine Raumdecke. Die im Gehäuse aufgenommenen Bildsensoreinheiten sind somit entgegengesetzt zueinander orientiert, und zwar verläuft der Erfassungsbereich einer Bildsensoreinheit unterhalb der im Gehäuse gegenüberliegenden Bildsensoreinheit und verläuft damit an dieser vorbei.

In einer vorteilhaften Ausführungsvariante schließen die Sensorlängsachsen der Bildsensoreinheiten jeweils einen spitzen Winkel mit der Kameralängsachse ein, wobei der Anstellwinkel der Bildsensoreinheiten gegenüber der Kameralängsachse beispielsweise zwischen 15° und 80°, vorzugsweise zwischen 35° und 65° beträgt.

Weiterhin vorteilhaft weist der Gehäuseboden eine Bilderfassungsöffnung auf, die mittels einer optisch transparenten, flachen und vorzugsweise abnehmbaren Abdeckplatte verschließbar ist. Die Bilderfassungsöffnung gibt die optische Sichtachse vom Gehäuseinnenraum in den zu überwachenden Raum frei und ist hinsichtlich ihres Durchmessers entsprechend an die konzentrische Anordnung bzw. die Anzahl und/oder den Anstellwinkel der Bildsensoreinheiten angepasst.

Die Bildsensoreinheiten sind weiterhin vorteilhaft in einer senkrecht zur Kameralängsachse verlaufenden Montageebene angeordnet, wobei die Montageebene parallel und beabstandet zum Gehäuseboden bzw. zur Abdeckplatte des Gehäuses verläuft.

Insbesondere sind die Bildsensoreinheiten derart schräg zueinander im Gehäuse angeordnet, dass sich deren Sensorlängsachsen und die Kameralängsachse in einem gemeinsamen virtuellen Schnittpunkt außerhalb des Gehäuses schneiden. Es ergibt sich damit eine hinsichtlich der Kameralängsachse symmetrische, insbesondere punktsymmetrische Anordnung der Bildsensoreinheiten, um eine Videoüberwachung über einen horizontalen Erfassungsbereich von 360° zu gewährleisten.

Weiterhin vorteilhaft weisen die Bildsensoreinheiten jeweils denselben radialen Abstand zur Kameralängsachse auf. Um die beschriebene Anordnung einfach und problemlos innerhalb des Gehäuses zu gewährleisten sind in einer Ausführungsvariante beispielsweise Haltemittel zur Aufnahme der Bildsensoreinheiten vorgesehen, die sich in Richtung der Bilderfassungsöffnung kuppelartig öffnen. Diese können beispielsweise zusammen mit den Bildsensoreinheiten ein austauschbares Modul bilden, welches die Herstellung und/oder die Wartung der Multi-Sensor-Kamera vereinfacht.

In einer vorteilhaften Ausführungsvariante ist mindestens eine weitere Bildsensoreinheit vorgesehen, deren Sensorlängsachse mit der Kameralängsachse zusammenfällt. Diese Bildsensoreinheit ermöglicht die Erfassung des Raumbereiches unmittelbar unterhalb der Multi-Sensor-Kamera.

Weiterhin vorteilhaft sind die mit ihren Objektiven schräg zur Kameralängsachse weisenden Bildsensoreinheit in einer parallel und beabstandet zum Gehäuseboden bzw. zur Abdeckplatte des Gehäuses verlaufenden ersten Montageebene angeordnet, wohingegen zumindest eine weitere Bildsensoreinheit in einer parallel zur ersten Montageebene orientierten zweiten Montageebnen angeordnet ist. Beim Vorsehen von zwei weiteren Bildsensoreinheiten können diese auch in einer zweiten und/oder dritten Montageebene angeordnet sein, die jeweils parallel zur ersten Montageebene verlaufen.

Es versteht sich, dass jedoch auch vier, sechs oder acht Bildsensoreinheiten schräg zur Kameralängsachse und konzentrisch um die Kameralängsachse verteilt innerhalb des Gehäuses angeordnet sein können, wohingegen zumindest eine weitere Bildsensoreinheit im Gehäuse angeordnet sein kann, deren Sensorlängsachse mit der Kameralängsachse zusammenfällt, und zumindest noch eine weitere Bildsensoreinheit im Gehäuseboden aufgenommen sein kann, deren Sensorlängsachse parallel zur Kameralängsachse verläuft. Mittels der beschriebenen Anordnung der Bildsensoreinheiten ist eine Videoüberwachung über eine horizontalen Erfassungsbereich von 360° möglich.

Weiterhin vorteilhaft ist das Gehäuse zum mit dem Gehäuseboden flächenbündigen Einbau in einer Gebäudedecke ausgebildet. Der Gehäuseboden ermöglicht insbesondere aufgrund seiner Ausgestaltung eine derartige flächenbündige Befestigung an der Gebäudedecke, insbesondere bei einem durch eine Öffnung in der Gebäudedecke geführte Kamera.

In einer bevorzugten Ausführungsvariante weisen die Bildsensoreinheiten Objektive mit denselben oder unterschiedlichen Brennweiten auf.

Weiterhin vorteilhaft sind die Bildsensoreinheiten und/oder die weiteren Bildsensoreinheiten zur Erfassung von hochauflösenden digitalen Einzelbildern ausgebildet.

Aufgrund der erfindungsgemäßen Anordnung der Bildsensoreinheiten innerhalb des Gehäuses weist diese besonders vorteilhaft Erfassungsbereiche auf, die sich im Bereich des Gehäuses, insbesondere im Bereich des Gehäuseinnenraumes kreuzen. Bei Verwendung zumindest einer weiterer Bildsensoreinheit kreuzen sich auch die Erfassungsbereiche der Bildsensoreinheiten und zumindest einer der weiteren Bildsensoreinheiten.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: eine schematische Seitenansicht einer deckenbündig in einem Raum verbauten erfindungsgemäßen Multi-Sensor-Kamera zur Videoüberwachung des Raumes,
- Fig. 2: ein schematische Schnittdarstellung durch einer flächenbündig in der Raumdecke verbauten erfindungsgemäßen Multi-Sensor-Kamera,
- Fig. 3: ein schematische Draufsicht auf die Gehäuseunterseite einer Ausführungsvariante der erfindungsgemäßen Multi-Sensor-Kamera ohne Abdeckung,
- Fig. 4: einen schematischen Schnitt entlang der Linie A-A durch die in Figur 3 gezeigte Multi-Sensor-Kamera mit Abdeckung ,jedoch ohne Gehäusewandung und Gehäuseoberseite,
- Fig. 5: einen schematischen Schnitt entlang der Linie B-B durch das in Figur 3 gezeigte Multi-Sensor-Kamera mit Abdeckung ,jedoch ohne Gehäusewandung und Gehäuseoberseite,
- Fig. 6: eine Seitenansicht auf die schematisch dargestellten Erfassungsbereiche einzelner Bildsensoreinheiten einer deckenmontierten Multi-Sensor-Kamera und
- Fig. 7: eine schematische Schnittdarstellung analog zur Figur 5 durch das Gehäuse einer erfindungsgemäßen Multi-Sensor-Kamera mit einer alternativen Anordnung der Bildsensoreinheiten.

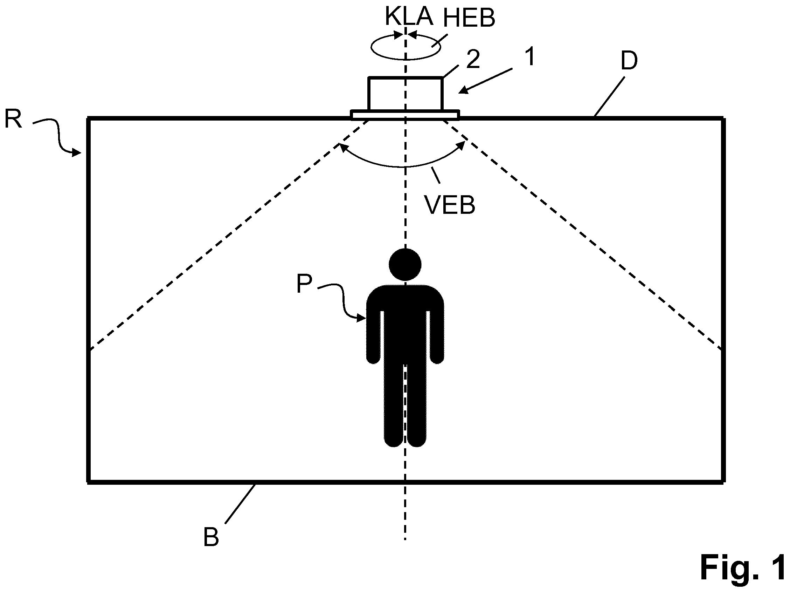

In Figur 1 ist eine schematische Seitenansicht eines Raumes R gezeigt, welcher mittels einer flächenbündig in der Decke D des Raumes R verbauten erfindungsgemäßen Multi-Sensor-Kamera 1 videoüberwacht wird.

Hierzu ist die erfindungsgemäße Multi-Sensor-Kamera 1 im dargestellten Ausführungsbeispiel im Bereich der Mitte des Raumes R in die Raumdecke D integriert, und zwar flächenbündig mit der zum Inneren des Raumes R bzw. zum Boden B des Raumes R weisenden Seite der Raumdecke D.

Unter einem flächenbündigen Einbau einer Multi-Sensor-Kamera 1 im erfindungsgemäßen Sinn wird der Einbau der Multi-Sensor-Kamera 1 in einen ebenen Bereich einer Raumdecke R derart verstanden, dass die Unterseite der Multi-Sensor-Kamera 1 nicht oder nur geringfügig in den Innenraum R hineinragt und damit zumindest der optische Eindruck einer ebenen geschlossenen Raumdecke R auch nach dem Einbau der Multi-Sensor-Kamera 1 weiterhin besteht. Bekannte Dome-Kameras oder Kameras mit "Fish-Eye"-Objektiven sind zwar an Raumdecke D befestigbar, ragen jedoch unterschiedlich zur erfindungsgemäßen Multi-Sensor-Kamera 1 zumindest teilweise merklich in den Raum R hinein, d.h. sind keinesfalls flächenbündig mit der Raumdecke R verbaut.

Die erfindungsgemäße Multi-Sensor-Kamera 1 weist vorzugsweise einen horizontalen Erfassungsbereich HEB von 360° und einen vertikalen Erfassungsbereich VEB von mindestens 140°, vorzugsweise 180° auf. Ausgehend von einer im eingebauten Zustand vertikal zur Raumdecke R bzw. zum Raumboden B verlaufenden Kameralängsachse KLA erstreckt sich damit der horizontale Erfassungsbereich HEB 360° um die Kameralängsachse KLA sowie der vertikale Erfassungsbereich VEB mindestens +/- 70° um die vertikal verlaufende Kameralängsachse KLA. Die erfindungsgemäße Multi-Sensor-Kamera 1 bildet somit eine 360° Kamera aus, welche im Bereich der Videoüberwachung von vorzugsweise geschlossenen Räumen Verwendung findet. In dem definierten Erfassungsbereich ist eine 360° und damit vollständige Erfassung der sich dort abspielenden Szenen möglich. Bei bekannten Multi-Sensor-Kameras mit einem horizontalen Erfassungsbereich HEB von 360° befinden sich die Bildsensoreinheiten immer unterhalb der Raumdecke D. Hier setzt die Erfindung an.

Die erfindungsgemäße Multi-Sensor-Kamera 1 umfasst zumindest ein sich entlang der Kameralängsachse KLA erstreckendes Gehäuse 2 mit einer Gehäuseunterseite 2.1, zumindest eine seitliche Gehäusewandung 2.2 sowie einer Gehäuseoberseite 2.3. Die Gehäuseunterseite 2.1 weist einen zumindest abschnittsweise senkrecht zur Kameralängsachse KLA verlaufenden ebenen Gehäuseboden 3 auf, der über eine Bilderfassungsöffnung 4 verfügt, die mittels einer optisch transparenten, flachen und vorzugsweise abnehmbaren Abdeckplatte 5 verschließbar ist.

Die Abdeckplatte 5 ist vorzugsweise aus Glas oder einem transparenten Kunststoffmaterial hergestellt und kann beispielsweise auch ein oder mehrteilig ausgebildet sein. Bei einer mittels der Abdeckplatte 5 verschlossenen Bilderfassungsöffnung 4 entsteht ein vorzugsweise geschlossener Gehäuseinnenraum 2', der von dem Gehäuseboden 3, der daran entlang der anschließenden Kameralängsachse KLA anschließenden Gehäusewandung 2.2 sowie der dem Gehäuseboden 3 gegenüberliegenden Gehäuseoberseite 2.3 eingeschlossen wird.

Erfindungsgemäß sind nun im Gehäuse 2 bzw. in dessen Gehäuseinnenraum 2' mehrere Bildsensoreinheiten 6, 6' zur Erfassung von hochauflösenden digitalen Einzelbildern vorgesehen. Eine derartige Bildsensoreinheit 6, 6' erstreckt sich jeweils entlang einer Sensorlängsachse SLA und weist ein Objektiv 6a, 6a' und einen daran entlang einer Sensorlängsachse SLA anschließenden Bildsensor 6b, 6b' auf. Die Sensorlängsachse SLA entspricht hierbei vorzugsweise der optischen Achse der Objektives 6a, 6a' bzw. verläuft zumindest parallel zu dieser. Die Bildsensoreinheiten 6, 6' sind konzentrisch um die Kameralängsachse KLA verteilt, oberhalb des Gehäusebodens 3 und innerhalb des Gehäuses 2 bzw. im Gehäuseinnenraum 2' angeordnet, und zwar derart, dass die Objektive 6a, 6a' der Bildsensoreinheiten 6, 6' zur Kameralängsachse KLA orientiert sind. Die optischen Achsen der Objektive 6a, 6a' sind damit in Richtung der Kameralängsachse KLA orientiert und kreuzen sich damit im Bereich der Kamera 1.

Beispielsweise schließt jeweils die Sensorlängsachse SLA einer Bildsensoreinheit 6, 6' einen spitzen Winkel w, w' mit der Kameralängsachse KLA ein. In einer bevorzugten Ausführungsvariante beträgt der spitze Winkel w, w' zwischen 15° und 80°, vorzugsweise zwischen 35° und 65°.

Durch die schräge Anordnung der Bildsensoreinheiten 6, 6' gegenüber der Kameralängsachse KLA und die konzentrische, vorzugsweise ringförmige Verteilung dessen um die Kameralängsachse KLA wird eine 360° Bilderfassung mittels vollständig im Gehäuseinnenraum 2' verbauten Bildsensoreinheiten 6, 6' und damit auch eine flächenbündige Deckenmontage möglich.

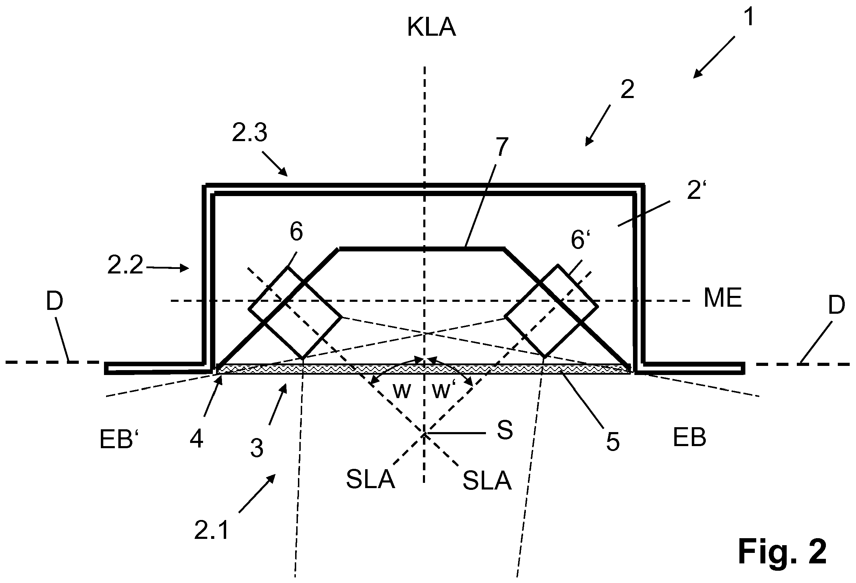

In Figur 2 ist beispielhaft eine schematische Schnittdarstellung durch ein flächenbündig in der Raumdecke D verbautes erfindungsgemäßes Multi-Sensor-Kamera 1 dargestellt, bei der beispielhaft lediglich zwei Bildsensoreinheiten 6, 6' gezeigt sind.

Die Bildsensoreinheiten 6, 6' sind vorzugsweise in einer senkrecht zur Kameralängsachse KLA verlaufenden Montageebene ME angeordnet, die parallel und beabstandet zum Gehäuseboden 3 bzw. zur Abdeckplatte 5 des Gehäuses 2 der Multi-Sensor-Kamera 1 verläuft. Die Bildsensoreinheiten 6, 6' sind vorzugsweise derart schräg zueinander im Gehäuse 2 angeordnet, dass sich deren Sensorlängsachsen SLA und die Kameralängsachse KLA in einem gemeinsamen virtuellen Schnittpunkt S außerhalb des Gehäuses 2 schneiden. Der Schnittpunkt liegt hierbei unterhalb des Gehäuses 2 bzw. des Gehäusebodens 3. Vorzugsweise sind die Bildsensoreinheiten ringförmig um die Kameralängsachse KLA verteilt im Gehäuse 2 angeordnet und weisen jeweils denselben radialen Abstand zur Kameralängsachse KLA auf. Die Erfassungsbereiche EB, EB' der einzelnen Bildsensoreinheiten 6, 6' erstrecken sich bei der erfindungsgemäßen Anordnung ausgehend vom Gehäuseinnenraum 2' über die Bilderfassungsöffnung 4 bzw. die diese verschließende transparente, ebene Abdeckplatte 5 nach außen.

Zur Befestigung der Bildsensoreinheiten 6, 6' können beispielsweise innerhalb des Gehäuses 2 Haltemittel 7 zur dessen Aufnahme und vorzugsweise lösbaren Befestigung vorgesehen sein, die sich in Richtung der Bilderfassungsöffnung 4 kuppelartig öffnen. Im vorliegenden Ausführungsbeispiel sind die Haltemittel 7 durch eine kuppelartige Haltekonstruktion umfassend eine Vielzahl von Streben- und Flächenelementen, die eine lösbare Befestigung der Bildsensoreinheiten 6, 6' in der vorgegebenen schräg zur Kameralängsachse KLA verlaufenden Halteposition ermöglichen, gebildet. In dieser Halteposition sind die Optiken bzw. Objektive 6a, 6a' in Richtung der Kameralängsachse KLA orientiert. Diese kuppelartige Haltekonstruktion 7 weist hierzu beispielsweise einen trapezförmigen Querschnitt auf, dessen Unterseite geöffnet und näherungsweise dem Randverlauf der Bilderfassungsöffnung 4 entspricht. Auch kann die kuppelartige Haltekonstruktion 7 modulartig ausgebildet sein, welches gemeinsam mit den daran befestigten Bildsensoreinheiten 6, 6' zur vereinfachten Montage und/oder Wartung dessen austauschbar ist.

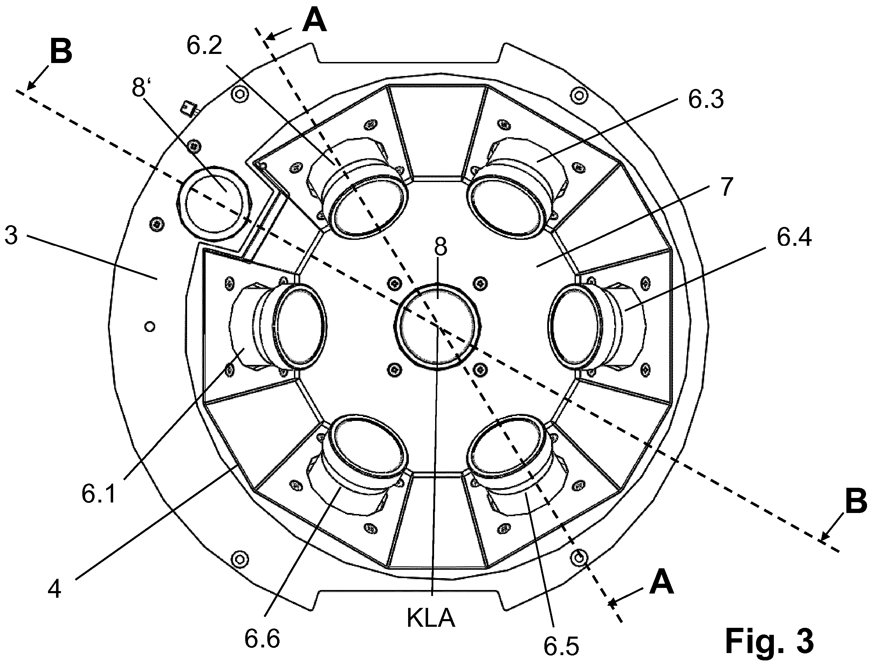

Figur 3 zeigt eine Draufsicht auf die Gehäuseunterseite 2.1 einer Ausführungsvariante der erfindungsgemäßen Multi-Sensor-Kamera 1, und zwar ohne Abdeckplatte 5, bei der beispielhaft sechs Bildsensoreinheiten 6, 6' konzentrisch um die Kameralängsachse KLA verteilt im Gehäuseinnenraum 2' angeordnet sind, die jeweils in einem spitzen Winkel w, w' zur Kameralängsachse KLA im Gehäuseinneren 2' angeordnet sind. Im vorliegenden Ausführungsbeispiel weist die Multi-Sensor-Kamera 1 eine erste bis sechste Bildsensoreinheit 6.1 bis 6.6 auf, die ringförmig und jeweils mit demselben Abstand um die senkrecht zur Blattebene verlaufende Kameralängsachse KLA angeordnet sind.

Erfindungsgemäß ist zumindest eine weitere Bildsensoreinheit 8, 8' vorgesehen, deren Sensorlängsachse SLA parallel zur Kameralängsachse KLA verläuft oder mit dieser zusammenfällt. Im vorliegenden Ausführungsbeispiel sind eine erste und zweite weitere Bildsensoreinheit 8, 8' vorgesehen, wobei die erste weitere Bildsensoreinheit 8 derart im Gehäuse 2 bzw. Gehäuseinnenraum 2' angeordnet ist, dass deren Sensorlängsachse SLA mit der Kameralängsachse KLA zusammenfällt. Die zweite weitere Bildsensoreinheit 8' ist im Gehäuseboden 4, und zwar vorzugsweise im Randbereich der Bilderfassungsöffnung 4, derart aufgenommen ist, dass deren Sensorlängsachse SLA parallel zur Kameralängsachse KLA verläuft. Alternativ kann auch die Sensorlängsachsen SLA beider weiterer Bildsensoreinheiten 8, 8' parallel zur Kameralängsachse KLA verlaufen.

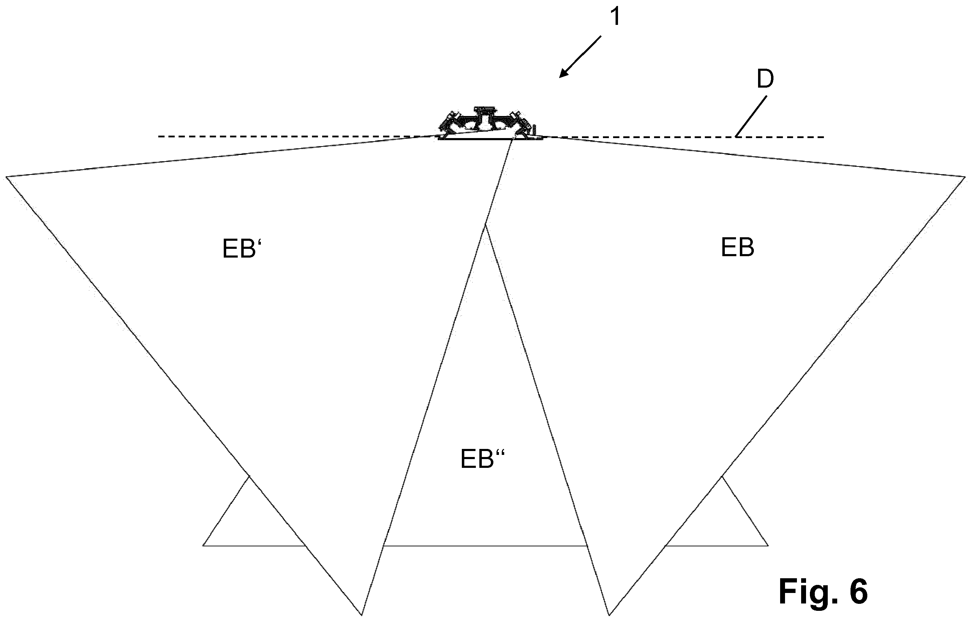

Mittels der weiteren Bildsensoreinheiten 8, 8' ist eine Erfassung des unmittelbar unterhalb der Multi-Sensor-Kamera 1 befindlichen Raumbereiches möglich. Hierzu weist die erste weitere Bildsensoreinheit 8 beispielsweise den in Figur 6 schematisch angedeuteten Erfassungsbereich EB" auf. Eine der weiteren Bildsensoreinheiten 8', und zwar im vorliegenden Ausführungsfall die zweite weitere Bildsensoreinheit 8' weist erfindungsgemäß ein Fish-Eye-Objektiv auf, mittels dem eine 360° Aufnahme erzeugbar ist. Der Erfassungsbereich der zweite weiteren Bildsensoreinheit 8' mit Fish-Eye-Objektiv erstreckt sich über den gesamten Raum, d.h. umfasst alle Erfassungsbreiche EB, EB', EB" der Bildsensoreinheiten 6, 6', 6.1 bis 6.6 bzw. ersten weiteren Bildsensoreinheit 8.

Die weitere Bildsensoreinheit 8' mit dem Fish-Eye-Objektiv bildet somit einen Übersichtsbildsensor aus, der zur Erzeugung eines Übersichtsvideobildes vorgesehen ist. Die erste bis sechste Bildsensoreinheit 6.1 bis 6.6 sind Detailbildsensoren zur Erzeugung von Detailvideobildern mit im Vergleich zum Übersichtsvideobild deutlich höherer Auflösungen. Eine erfindungsgemäße Mulit-Sensor-Kamera 1 liefert damit Videodaten eines Raumbereiches bzw. Aufnahmebereiches mit unterschiedlichen Detailauflösungen, zwischen den im Rahmen der Darstellung des Videobildes auf einem Monitor umgeschaltet werden kann.

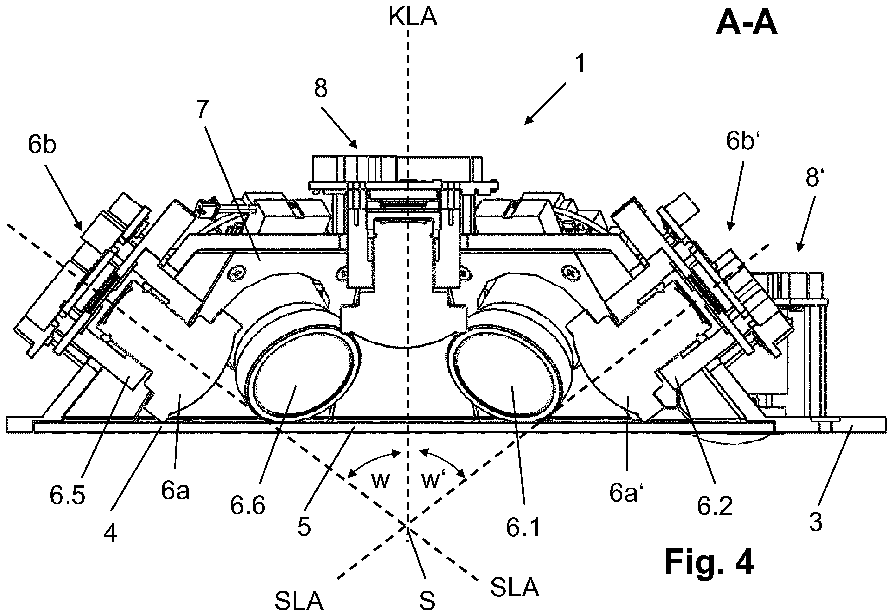

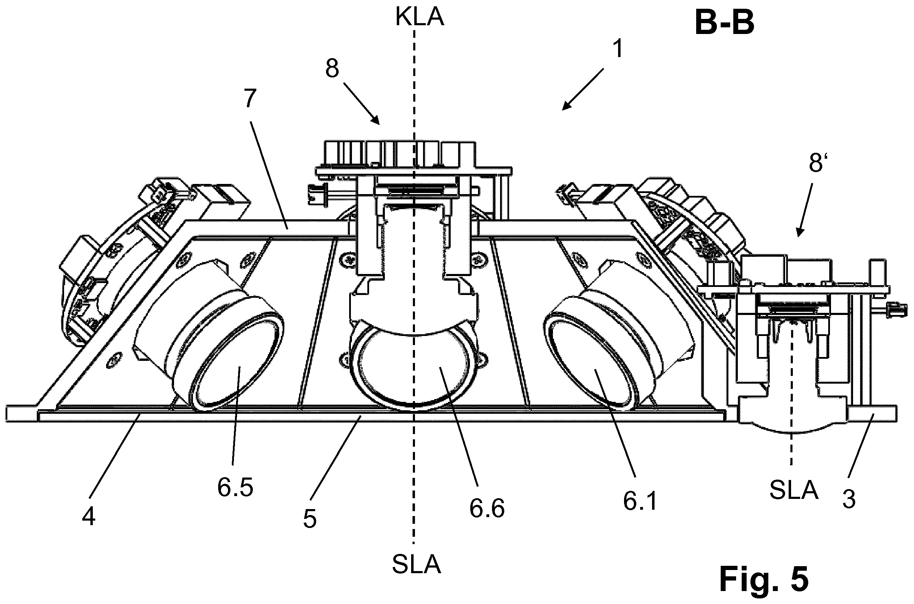

In den Figuren 4 und 5 ist jeweils ein Längsschnitt entlang der Linie A-A bzw. B-B durch die Multi-Sensor-Kamera 1 gemäß Figur 3 gezeigt, jedoch mit Abdeckplatte 5. Darüber hinaus sind in den Figuren 4 und 5 die Gehäusewandung 2.2 und die Gehäuseoberseite 2.3 nicht dargestellt, sondern lediglich die Gehäuseunterseite 2.1 bzw. der Gehäuseboden 3.

Im Ausführungsbeispiel gemäß der Figuren 3 bis 5 finden damit in Summe acht Bildsensoreinheit 6.1 - 6.6, 8, 8' Verwendung. Die Erfindung ist jedoch keinesfalls auf die dargestellte Anzahl von Bildsensoreinheiten 6.1 - 6.6 bzw. weitere Bildsensoreinheiten 8, 8' beschränkt, sondern es versteht sich, dass jede beliebige Anzahl in einer Montageebene ME gleichmäßig verteilt um die Kameralängsachse KLA anordenbare Bildsensoreinheiten 6, 6' und zusätzlich im Gehäuseboden 3 und/oder im Gehäuseinnenraum 2' verbaubare weitere Bildsensoreinheiten 8, 8' verbaut werden können, sofern dies technisch sinnvoll erscheint. Vorzugsweise sind vier, sechs oder acht Bildsensoreinheiten 6, 6' schräg zur Kameralängsachse KLA und konzentrisch um die Kameralängsachse KLA verteilt innerhalb des Gehäuses 2 angeordnet.

Figur 4 zeigt auch einen Schnitt durch zwei gegenüberliegende Bildsensoreinheiten 6, 6', der die Anordnung der Objektive 6a, 6a' und der zugehörigen Bildsensoren 6b, 6b' jeweils entlang der Sensorlängsachsen SLA zu entnehmen ist.

Die Bildsensoreinheiten 6, 6' bzw. weiteren Bildsensoreinheiten 8, 8' können Objektive 6a, 6a' mit denselben oder unterschiedlichen Brennweiten aufweisen. Bei Verwendung von Objektiven 6a, 6a' mit unterschiedlichen Brennweiten können mittels der Bildsensoreinheiten 6, 6' bzw. der weiteren Bildsensoreinheiten 8, 8' auch von der Multi-Sensor-Kamera 1 weiter entfernt im Raum R liegende Überwachungsbereiche mit einer höheren Auflösung bezogen auf den Raumwinkel in den Einheiten "Pixel/Winkel" aufgezeichnet werden als näher an der Multi-Sensor-Kamera 1 befindliche Raumbereiche.

Mittels der Multi-Sensor-Kamera 1 werden in einer bevorzugten Ausführungsvariante sämtliche Raumbereiche eines zu überwachenden Raumes R unabhängig von der Entfernung zum Multi-Sensor-Kamera 1 in hoher Auflösung erfasst und in einem mit der Multi-Sensor-Kamera 1 verbunden einen oder mehreren Rekordern, vorzugsweise Digitalrekordern eines Überwachungssystems aufgezeichnet.

In Figur 6 sind beispielhaft die Erfassungsbereiche EB, EB', EB" der Bildsensoreinheiten 6, 6' bzw. einer weiteren Bildsensoreinheiten 8 in einer schematischen Seitenansicht auf eine deckenmontierte, im Schnitt angedeutete Multi-Sensor-Kamera 1 dargestellt. Daraus ist deutliche ersichtlich, dass sich die Erfassungsbereiche EB, EB', EB" bereits innerhalb des Gehäuses 2 kreuzen.

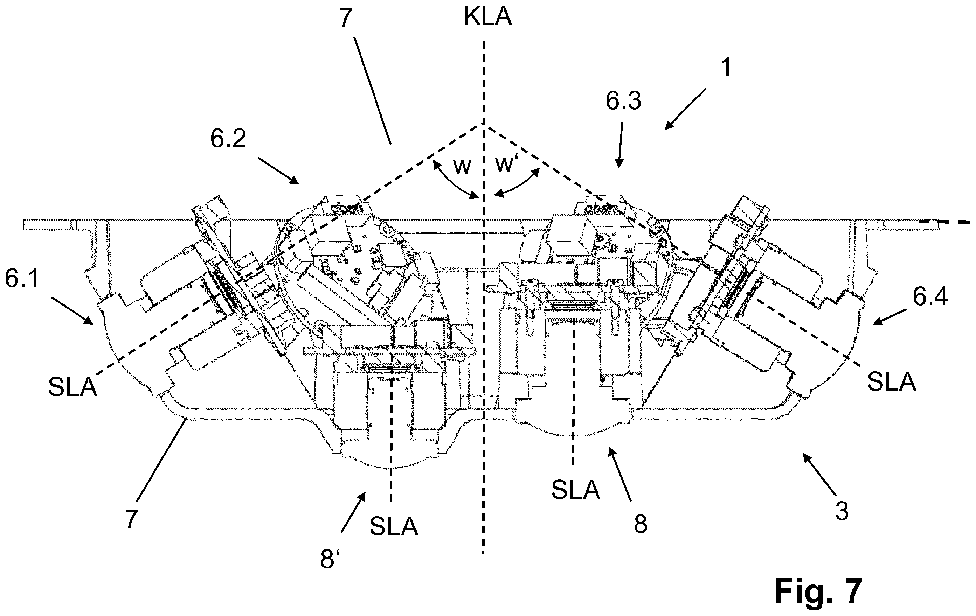

In Figur 7 ist beispielhaft ein schematischer Schnitt analog zur Figur 5 durch eine alternative Ausführungsvariante einer Multi-Sensor-Kamera 1 gezeigt, bei der die Objektive 6a, 6a' der Bildsensoreinheiten 6.1 - 6.6 zur Kameralängsachse KLA orientiert sind oder von der Kameralängsachse KLA wegweisen. Die Sensorlängsachsen SLA der Bildsensoreinheiten 6.1 - 6.6 schließen auch hier wiederum einen spitzen Winkel w,w' mit der Kameralängsachse KLA ein, wobei die Sensorlängsachsen SLA der weiteren Bildsensoreinheiten 8, 8' parallel zur Kameralängsachse KLA verlaufen. Bei dieser Ausführungsvariante der Multi-Sensor-Kamera 1 sind die Haltemittel 7 wiederum durch eine kuppelartige Haltekonstruktion gebildet, welche beispielsweise einen trapezförmigen Querschnitt aufweist und zur Gehäuseoberseite 2.3 geöffnet ist. Die kuppelartigen Haltekonstruktion 7 bildet bevorzugt auch die Gehäuseunterseite 2.1 bzw. den Gehäuseboden 3 aus, so dass eine Bilderfassungsöffnung 4 entfällt. Die Bildsensoreinheiten 6.1 - 6.6 sind wiederum ringförmig um die Kameralängsachse KLA verteilt im Gehäuse 2 angeordnet, wobei die weiteren Bildsensoreinheiten 8, 8' einen geringeren radialen Abstand zur Kamerallängsachse KLA als die diese umgebenden Bildsensoreinheiten 6.1 - 6.6. Die weiteren Bildsensoreinheiten 8, 8' sind somit in dem von den Bildsensoreinheiten 6.1 - 6.6 gebildeten "Sensorring" aufgenommen bzw. angeordnet. In dieser Halteposition weisen die Optiken bzw. Objektive Bildsensoreinheiten 6.1 - 6.6 von der Kameralängsachse KLA weg, d.h. sind nach außen orientiert. Die kuppelartige Haltekonstruktion 7 kann auch modulartig ausgebildet sein, so dass eine Entnahme dessen gemeinsam mit den daran befestigten Bildsensoreinheiten 6, 6' und weiteren Bildsensoreinheiten 8, 8' zur vereinfachten Montage und/oder Wartung möglich ist.

Die Erfindung wurde voranstehend an Ausführungsbeispielen beschrieben. Der Umfang der Erfindung wird durch die beigefügten Ansprüche definiert.

### Bezugszeichenliste

- 1: Multi-Sensor-Kamera
- 2: Gehäuse
- 2': Gehäuseinnenraum
- 2.1: Gehäuseunterseite
- 2.2: Gehäusewandung
- 2.3: Gehäuseoberseite
- 3: Gehäuseboden
- 4: Bilderfassungsöffnung
- 5: transparente, ebene Abdeckplatte
- 6, 6': Bildsensoreinheit
- 6a, 6a': Objektiv
- 6b, 6b': Bildsensor
- 6.1 - 6.6: erste bis sechste Bildsensoreinheit
- 7: Haltemittel
- 8, 8': weitere Bildsensoreinheit(en)

- B: Boden
- D: Decke
- EB, EB', EB": Erfassungsbereiche
- HEB: Horizontaler Erfassungsbereich
- ME: Montageebene
- P: Person
- R: Raum
- S: gemeinsamer virtueller Schnittpunkt
- VEB: Vertikaler Erfassungsbereich
- w, w': spitzer Winkel

## Patentansprüche

1. Multi-Sensor-Kamera (1) umfassend zumindest ein sich entlang einer Kameralängsachse (KLA) erstreckendes Gehäuse (2) mit einem zumindest abschnittsweise senkrecht zur Kameralängsachse (KLA) verlaufenden Gehäuseboden (3) und mehrere Bildsensoreinheiten (6, 6', 6.1 - 6.6), wobei eine Bildsensoreinheit (6, 6', 6.1 - 6.6) ein Objektiv (6a, 6a') und einen daran entlang einer Sensorlängsachse (SLA) anschließenden Bildsensor (6b, 6b') aufweist, wobei die Bildsensoreinheiten (6, 6', 6.1 - 6.6) konzentrisch um die Kameralängsachse (KLA) verteilt und derart innerhalb des Gehäuse (2) angeordnet sind, dass die Objektive (6a, 6a') der Bildsensoreinheiten (6, 6', 6.1 - 6.6) zur Kameralängsachse (KLA) orientiert sind oder von der Kameralängsachse (KLA) nach außen weisen, wobei mindestens vier Bildsensoreinheiten (6, 6', 6.1 - 6.6) und mindestens zwei weitere Bildsensoreinheiten (8, 8') vorgesehen sind, wobei die Sensorlängsachsen (SLA) beider weiterer Bildsensoreinheiten (8, 8') parallel zur Kameralängsachse (KLA) verlaufen und eine der weiteren Bildsensoreinheiten (8') ein Fish-Eye-Objektiv aufweist und wobei die mindestens vier Bildsensoreinheiten (6, 6', 6.1 - 6.6) ringförmig um die Kameralängsachse (KLA) verteilt im Gehäuse (2) angeordnet sind, **dadurch gekennzeichnet, dass** die ein Fish-Eye-Objektiv aufweisende weitere Bildsensoreinheit (8') außerhalb des durch die ringförmig verteilten, mindestens vier Bildsensoreinheiten geformten Ringes angeordnet ist.

2. Multi-Sensor-Kamera nach Anspruch 1, **dadurch gekennzeichnet, dass** die Sensorlängsachsen (SLA) der Bildsensoreinheiten (6, 6', 6.1 - 6.6) jeweils einen spitzen Winkel (w, w') mit der Kameralängsachse (KLA) einschließt.

3. Multi-Sensor-Kamera nach Anspruch 1 oder 2, **dadurch gekennzeichnet, dass** der Gehäuseboden (3) eine Bilderfassungsöffnung (4) aufweist, die mittels einer optisch transparenten, flachen und vorzugsweise abnehmbaren Abdeckplatte (5) verschließbar ist.

4. Multi-Sensor-Kamera nach einem der Ansprüche 1 bis 3, **dadurch gekennzeichnet, dass** die Bildsensoreinheiten (6, 6',6.1 - 6.6) in zumindest einer senkrecht zur Kameralängsachse (KLA) verlaufenden Montageebene (ME) angeordnet sind.

5. Multi-Sensor-Kamera nach Anspruch 4, **dadurch gekennzeichnet, dass** die zumindest eine Montageebene (ME) parallel und beabstandet zum Gehäuseboden (3) bzw. zur Abdeckplatte (5) des Gehäuses (2) verläuft.

6. Multi-Sensor-Kamera nach einem der Ansprüche 1 bis 5, **dadurch gekennzeichnet, dass** die Bildsensoreinheiten (6, 6', 6.1 - 6.6) derart schräg zueinander im Gehäuse (2) angeordnet sind, dass sich deren Sensorlängsachsen (SLA) und die Kameralängsachse (KLA) in einem gemeinsamen virtuellen Schnittpunkt (S) außerhalb des Gehäuses schneiden.

7. Multi-Sensor-Kamera nach einem der Ansprüche 1 bis 6, **dadurch gekennzeichnet, dass** die Bildsensoreinheiten (6, 6', 6.1 - 6.6) jeweils denselben radialen Abstand zur Kameralängsachse (KLA) aufweisen.

8. Multi-Sensor-Kamera nach einem der Ansprüche 1 bis 7, **dadurch gekennzeichnet, dass** innerhalb des Gehäuses (2) Haltemittel (7) zur Aufnahme der Bildsensoreinheiten (6, 6', 6.1 - 6.6) vorgesehen sind.

9. Multi-Sensor-Kamera nach Anspruch 8, **dadurch gekennzeichnet, dass** sich die Haltemittel (7) in Richtung der Bilderfassungsöffnung (4) oder in Richtung einer Gehäuseoberseite (2.3) kuppelartig öffnen.

10. Multi-Sensor-Kamera nach einem der Ansprüche 1 bis 9, **dadurch gekennzeichnet, dass** die Sensorlängsachse (SLA) mindestens einer der weiteren Bildsensoreinheiten (8) mit der Kameralängsachse (KLA) zusammenfällt.

11. Multi-Sensor-Kamera nach einem der Ansprüche 1 bis 10, **dadurch gekennzeichnet, dass** vier, sechs oder acht Bildsensoreinheiten (6, 6') schräg zur Kameralängsachse (KLA) und konzentrisch um die Kameralängsachse (KLA) verteilt innerhalb des Gehäuses (2) angeordnet sind und/oder dass zumindest eine weitere Bildsensoreinheit (8) im Gehäuse (2) angeordnet ist, deren Sensorlängsachse (SLA) mit der Kameralängsachse (KLA) zusammenfällt, und zumindest noch eine weitere Bildsensoreinheit (8') im Gehäuseboden (3) aufgenommen ist, deren Sensorlängsachse (SLA) parallel zur Kameralängsachse (KLA) verläuft.

12. Multi-Sensor-Kamera nach einem der Ansprüche 1 bis 11, **dadurch gekennzeichnet, dass** das Gehäuse (2) zum mit dem Gehäuseboden (3) flächenbündigen Einbau in einer Gebäudedecke (D) ausgebildet ist und/oder dass die Bildsensoreinheiten (6, 6', 6.1 - 6.6) Objektive (6a, 6a') mit denselben oder unterschiedlichen Brennweiten aufweisen.

13. Multi-Sensor-Kamera nach einem der Ansprüche 1 bis 12, **dadurch gekennzeichnet, dass** der spitze Winkel (w, w') zwischen 15° und 80°, vorzugsweise zwischen 35° und 65° beträgt und/oder dass die Bildsensoreinheiten (6, 6', 6.1 - 6.6) und/oder die weiteren Bildsensoreinheiten (8, 8') zur Erfassung von hochauflösenden digitalen Einzelbildern ausgebildet sind.

14. Multi-Sensor-Kamera nach einem der Ansprüche 1 bis 13, **dadurch gekennzeichnet, dass** die Bildsensoreinheiten (6, 6', 6.1 - 6.6) Erfassungsbereiche (EB, EB') aufweisen, die sich im Bereich des Gehäuses (2), insbesondere im Bereich des Gehäuseinnenraumes (2') kreuzen.

15. Multi-Sensor-Kamera nach Anspruch 14, **dadurch gekennzeichnet, dass** sich die Erfassungsbereiche (EB, EB', EB") der Bildsensoreinheiten (6, 6', 6.1 - 6.6) und zumindest einer der weiteren Bildsensoreinheiten (8, 8') kreuzen.

## Claims

1. Multi-sensor camera (1) comprising at least a housing (2) extending along a camera longitudinal axis (KLA) with a housing base (3) running at least in sections perpendicularly to the camera longitudinal axis (KLA) and a plurality of image sensor units (6, 6', 6.1 - 6.6), wherein an image sensor unit (6, 6', 6.1 - 6.6) comprises a lens (6a, 6a') and an image sensor (6b, 6b') adjoining thereto along a sensor longitudinal axis (SLA), wherein the image sensor units (6, 6', 6.1 - 6.6) are distributed concentrically about the camera longitudinal axis (KLA) and are arranged within the housing (2) such that the lenses (6a, 6a') of the image sensor units (6, 6', 6.1 - 6.6) are oriented towards the camera longitudinal axis (KLA) or point outwards from the camera longitudinal axis (KLA), wherein at least four image sensor units (6, 6', 6.1 - 6.6) and at least two further image sensor units (8, 8') are provided, wherein the sensor longitudinal axes (SLA) of both further image sensor units (8, 8') run parallel to the camera longitudinal axis (KLA) and wherein one of the further image sensor units (8') comprises a fisheye lens, and wherein the at least four image sensor units (6, 6', 6.1 - 6.6) are arranged in the housing (2) in a ring-shaped distribution around the camera longitudinal axis (KLA), **characterised in that** the further image sensor unit (8') comprising a fish-eye lens is arranged outside the ring formed by the at least four image sensor units arranged in the ring-shaped distribution.

2. Multi-sensor camera according to claim 1, **characterised in that** the sensor longitudinal axes (SLA) of the image sensor units (6, 6', 6.1 - 6.6) each form an acute angle (w, w') with the camera longitudinal axis (KLA).

3. Multi-sensor camera according to claim 1 or 2, **characterised in that** the housing base (3) comprises an image capture aperture (4) which can be closed by means of an optically transparent, flat and preferably removable cover plate (5).

4. Multi-sensor camera according to any one of claims 1 to 3, **characterised in that** the image sensor units (6, 6', 6.1 - 6.6) are arranged in at least one mounting plane (ME) extending perpendicular to the camera longitudinal axis (KLA).

5. Multi-sensor camera according to claim 4, **characterised in that** the at least one mounting plane (ME) extends parallel to and spaced from the housing base (3) or the cover plate (5) of the housing (2).

6. Multi-sensor camera according to any one of claims 1 to 5, **characterised in that** the image sensor units (6, 6', 6.1 - 6.6) are arranged inclined to one another within the housing (2) such that their sensor longitudinal axes (SLA) and the camera longitudinal axis (KLA) intersect at a common virtual intersection point (S) outside the housing.

7. Multi-sensor camera according to any one of claims 1 to 6, **characterised in that** the image sensor units (6, 6', 6.1 - 6.6) each comprise the same radial distance from the camera longitudinal axis (KLA).

8. Multi-sensor camera according to any one of claims 1 to 7, **characterised in that** retaining means (7) for holding the image sensor units (6, 6', 6.1 - 6.6) are provided within the housing (2).

9. Multi-sensor camera according to claim 8, **characterised in that** the retaining means (7) open in a dome-like manner towards the image capture aperture (4) or towards an upper side of the housing (2.3).

10. Multi-sensor camera according to any one of claims 1 to 9, **characterised in that** the sensor longitudinal axis (SLA) of at least one of the further image sensor units (8) coincides with the camera longitudinal axis (KLA).

11. Multi-sensor camera according to any one of claims 1 to 10, **characterised in that** four, six or eight image sensor units (6, 6') are arranged inclined to the camera longitudinal axis (KLA) and distributed concentrically about the camera longitudinal axis (KLA) within the housing (2), and/or **in that** at least one further image sensor unit (8) is arranged in the housing (2), the longitudinal axis of the sensor (SLA) threreof coincides with the camera longitudinal axis (KLA), and at least one further image sensor unit (8') is accommodated in the housing base (3), the sensor longitudinal axis (SLA) of which runs parallel to the camera longitudinal axis (KLA).

12. Multi-sensor camera according to any one of claims 1 to 11, **characterised in that** the housing (2) is designed to be installed in a building ceiling (D) with the housing base (3) flush therewith and/or **in that** the image sensor units (6, 6', 6.1 - 6.6) comprise lenses (6a, 6a') with the same or different focal lengths.

13. Multi-sensor camera according to any one of claims 1 to 12, **characterised in that** the acute angle (w, w') is between 15° and 80°, preferably between 35° and 65°, and/or **in that** the image sensor units (6, 6', 6.1 - 6.6) and/or the further image sensor units (8, 8') are designed to capture individual high-resolution digital images.

14. Multi-sensor camera according to any one of claims 1 to 13, **characterised in that** the image sensor units (6, 6', 6.1 - 6.6) comprise detection areas (EB, EB') which intersect in the region of the housing (2), in particular in the region of the interior of the housing (2').

15. Multi-sensor camera according to claim 14, **characterised in that** the detection areas (EB, EB', EB") of the image sensor units (6, 6', 6.1 - 6.6) and of at least one of the further image sensor units (8, 8') intersect.

## Revendications

1. Caméra à capteurs multiples (1) comprenant au moins un boîtier (2) s'étendant le long d'un axe longitudinal de caméra (KLA), avec un fond de boîtier (3) s'étendant au moins par sections perpendiculairement à l'axe longitudinal de caméra (KLA), et plusieurs unités de capteurs d'image (6, 6', 6.1 - 6.6), dans lequel une unité de capteur d'image (6, 6', 6.1 - 6.6) comporte un objectif (6a, 6a') et un capteur d'image (6b, 6b') qui s'y raccorde le long d'un axe longitudinal du capteur (SLA), dans lequel les unités de capteurs d'image (6, 6', 6.1 - 6.6) sont réparties de manière concentrique autour de l'axe longitudinal de la caméra (KLA) et disposées à l'intérieur du boîtier (2) de telle sorte que les objectifs (6a, 6a') des unités de capteurs d'image (6, 6', 6.1 - 6.6) soient orientés vers l'axe longitudinal de la caméra (KLA) ou soient tournés vers l'extérieur par rapport à l'axe longitudinal de la caméra (KLA), dans lequel au moins quatre unités de capteurs d'image (6, 6', 6.1 - 6.6) et au moins deux autres unités de capteurs d'image (8, 8') sont prévues, dans lequel les axes longitudinaux des capteurs (SLA) des deux autres unités de capteurs d'image (8, 8') s'étendent parallèlement à l'axe longitudinal de la caméra (KLA) et l'une des autres unités de capteurs d'image (8') comporte un objectif fish-eye, et dans lequel les au moins quatre unités de capteurs d'image (6, 6', 6.1 - 6.6) sont disposées en anneau autour de l'axe longitudinal de la caméra (KLA) dans l'intérieur du boîtier (2), **caractérisée en ce que** l'unité de capteur d'image supplémentaire (8') comportant un objectif fish-eye est disposée à l'extérieur de l'anneau formé par les au moins quatre unités de capteur d'image réparties en anneau.

2. Caméra à capteurs multiples selon la revendication 1, **caractérisée en ce que** les axes longitudinaux des capteurs (SLA) des unités de capteurs d'image (6, 6', 6.1 - 6.6) forment chacun un angle aigu (w, w') avec l'axe longitudinal de la caméra (KLA).

3. Caméra à capteurs multiples selon la revendication 1 ou 2, **caractérisée en ce que** le fond du boîtier (3) présente une ouverture de capture d'image (4) qui peut être fermée au moyen d'une plaque de recouvrement (5) optiquement transparente, et de préférence amovible.

4. Caméra à capteurs multiples selon l'une des revendications 1 à 3, **caractérisée en ce que** les unités de capteurs d'image (6, 6', 6.1 - 6.6) sont disposées dans au moins un plan de montage (ME) s'étendant perpendiculairement à l'axe longitudinal de la caméra (KLA).

5. Caméra à capteurs multiples selon la revendication 4, **caractérisée en ce que** ledit au moins un plan de montage (ME) s'étend parallèlement et à distance du fond du boîtier (3) ou de la plaque de recouvrement (5) du boîtier (2).

6. Caméra à capteurs multiples selon l'une des revendications 1 à 5, **caractérisée en ce que** les unités de capteurs d'image (6, 6', 6.1 - 6.6) sont disposées en biais les unes par rapport aux autres dans le boîtier (2), de telle sorte que leurs axes longitudinaux de capteur (SLA) et l'axe longitudinal de la caméra (KLA) se coupent en un point d'intersection virtuel commun (S) situé à l'extérieur du boîtier.

7. Caméra à capteurs multiples selon l'une des revendications 1 à 6, **caractérisée en ce que** les unités de capteurs d'image (6, 6', 6.1 - 6.6) présentent chacune la même distance radiale par rapport à l'axe longitudinal de la caméra (KLA).

8. Caméra à capteurs multiples selon l'une des revendications 1 à 7, **caractérisée en ce que** des moyens de fixation (7) destinés à recevoir les unités de capteurs d'image (6, 6', 6.1 - 6.6) sont prévus à l'intérieur du boîtier (2).

9. Caméra à capteurs multiples selon la revendication 8, **caractérisée en ce que** les moyens de fixation (7) s'ouvrent en forme de dôme en direction de l'ouverture de capture d'image (4) ou en direction d'une face supérieure du boîtier (2.3).

10. Caméra à capteurs multiples selon l'une des revendications 1 à 9, **caractérisée en ce que** l'axe longitudinal du capteur (SLA) d'au moins l'une des autres unités de capteurs d'image (8) coïncide avec l'axe longitudinal de la caméra (KLA).

11. Caméra à capteurs multiples selon l'une des revendications 1 à 10, **caractérisée en ce que** quatre, six ou huit unités de capteurs d'image (6, 6') sont disposées à l'intérieur du boîtier (2) de manière oblique par rapport à l'axe longitudinal de la caméra (KLA) et réparties concentriquement autour de celui-ci, et/ou **en ce qu'**au moins une autre unité de capteur d'image (8) est disposée dans le boîtier (2), dont l'axe longitudinal du capteur (SLA) coïncide avec l'axe longitudinal de la caméra (KLA), et qu'au moins une autre unité de capteur d'image (8') est logée dans le fond du boîtier (3), dont l'axe longitudinal du capteur (SLA) s'étend parallèlement à l'axe longitudinal de la caméra (KLA).

12. Caméra à capteurs multiples selon l'une des revendications 1 à 11, **caractérisée en ce que** le boîtier (2) est conçu pour être encastré à fleur du fond du boîtier (3) dans un plafond de bâtiment (D) et/ou **en ce que** les unités de capteurs d'image (6, 6', 6.1 à 6.6) comportent des objectifs (6a, 6a') ayant des distances focales identiques ou différentes.

13. Caméra à capteurs multiples selon l'une des revendications 1 à 12, **caractérisée en ce que** l'angle aigu (w, w') est compris entre 15° et 80°, de préférence entre 35° et 65°, et/ou **en ce que** les unités de capteurs d'image (6, 6', 6.1 à 6.6) et/ou les autres unités de capteurs d'image (8, 8') sont conçues pour l'acquisition d'images numériques individuelles à haute résolution.

14. Caméra à capteurs multiples selon l'une des revendications 1 à 13, **caractérisée en ce que** les unités de capteurs d'image (6, 6', 6.1 - 6.6) présentent des zones de détection (EB, EB') qui se croisent dans la région du boîtier (2), en particulier dans la région de l'espace intérieur du boîtier (2').

15. Caméra à capteurs multiples selon la revendication 14, **caractérisée en ce que** les zones de détection (EB, EB', EB") des unités de capteurs d'image (6, 6', 6.1 - 6.6) et d'au moins l'une des autres unités de capteurs d'image (8, 8') se croisent.
